# EUROPÄISCHE PATENTSCHRIFT

(11) **EP 2 095 865 B1**
(45) Veröffentlichungstag und Bekanntmachung des Hinweises auf die Patenterteilung: **03.08.2011**
(21) Anmeldenummer: 08018034.2
(22) Anmeldetag: 15.10.2008
(51) Int. Cl.: B01D 53/94, B01J 37/02, F01N 3/035

(54) **Vorrichtung zur Verminderung von Dibenzo-Dioxin, Dibenzo-Furan und Partikel-Emissionen**
Device for reducing dibenzo-dioxin and dibenzo-furan and particle emissions
Dispositif de réduction de dioxine de Dibenzo, Dibenzo-Furan et d'émissions de particules

(30) Priorität: 12.02.2008 DE 102008008785
(43) Veröffentlichungstag der Anmeldung: 02.09.2009
(73) Patentinhaber: MAN Truck & Bus AG, 80995 München (DE)
(72) Erfinder: Döring, Andreas, 80339 München (DE)

(56) Entgegenhaltungen:
- EP-A- 1 602 403
- WO-A-03/018176
- WO-A-2004/071646
- WO-A-2006/023932
- WO-A-2007/074599
- DE-A1-102006 031 661

## Beschreibung

Gegenstand der Erfindung ist eine Vorrichtung zur Verminderung von Dibenzo-Dioxin-, Dibenzo-Furan- und Partikel-Emissionen bei mit Luftüberschuss betriebenen Brennkraftmaschinen, wie Dieselmotoren und Benzinmotoren mit Direkteinspritzung, gemäß dem Oberbegriff des Anspruches 1, sowie ein Verfahren zur Herstellung einer Vorrichtung nach Anspruch 1.

Neben Feststoffpartikeln gehören Stickoxide zu den limitierten Abgaskomponenten, die während Verbrennungsvorgängen entstehen und deren erlaubte Emissionen immer weiter abgesenkt werden. Zur Minimierung dieser Abgaskomponenten bei in Kraftfahrzeugen betriebenen Brennkraftmaschinen werden heute unterschiedliche Verfahren eingesetzt. Die Verringerung der Stickoxide geschieht meist mit Hilfe von Katalysatoren, in sauerstoffreichem Abgas ist zusätzlich ein Reduktionsmittel erforderlich, um die Selektivität und die NOₓ -Umsätze anzuheben. Bekannt geworden sind diese Verfahren unter dem Sammelbegriff SCR-Verfahren, wobei SCR für "selektive katalytische Reduktion" steht. Ihr Einsatz erfolgt seit vielen Jahren im Kraftwerksbereich und in jüngster Zeit auch bei Brennkraftmaschinen. Eine ausführliche Darstellung solcher Verfahren ist der DE 34 28 232 A1 zu entnehmen. Als SCR-Katalysatoren können V₂O₅-haltige Mischoxide, beispielsweise in der Form V₂O₅/WO₃/TiO₂, verwendet werden. Typische V₂O₅-Anteile liegen dabei zwischen 0,2-3%. Als Reduktionsmittel kommen in der praktischen Anwendung Ammoniak oder Ammoniak abspaltende Verbindungen, wie Harnstoff oder Ammoniumformiat, in fester oder Lösungsform zum Einsatz. Für die Umsetzung von einem Mol Stickstoffmonoxid ist dabei ein Mol Ammoniak notwendig.

4NO+4NH₃+O₂ ⇒ 4N₂ +6H₂O (1)

Wird den SCR-Katalysatoren ein platinhaltiger NO-Oxidationskatalysator zur Bildung von NO₂ vorgeschaltet

2NO+O₂ ⇔ 2NO₂ (2)

so kann die SCR-Reaktion erheblich beschleunigt und die Tieftemperaturaktivität merklich angehoben werden.

NO+2NH₃+NO₂ ⇒ 2N₂+3H₂O (3)

Bei in Fahrzeugen betriebenen Brennkraftmaschinen gestaltet sich die Stickoxidreduzierung mit Hilfe des SCR-Verfahrens deshalb schwierig, weil dort wechselnde Betriebsbedingungen vorliegen, was die mengenmäßige Zumessung des Reduktionsmittels erschwert. Es soll zwar einerseits ein möglichst hoher Umsatz an Stickoxiden erreicht werden, andererseits ist aber darauf zu achteten, dass es nicht zur Emission von unverbrauchtem Ammoniak kommt. Um hier Abhilfe zu schaffen, wird häufig ein dem SCR-Katalysator nachgeordneter Ammoniak-Sperrkatalysator eingesetzt, der überschüssigen Ammoniak zu Stickstoff und Wasserdampf umsetzt.

Zur Minimierung der Feinstoffpartikel werden sowohl im Kraftwerksbereich als auch bei Fahrzeugen entweder sogenannte Partikelabscheider oder Partikelfilter eingesetzt.

Eine für die Anwendung in Fahrzeugen typische Anordnung mit Partikelabscheider ist beispielsweise in der EP 1 072 765 A1 beschrieben. Derartige Anordnungen unterscheiden sich von solchen mit Partikelfiltern dadurch, dass der Durchmesser der Kanäle des Partikelabscheiders wesentlich größer als der Durchmesser der größten vorkommenden Partikel ist während bei Partikelfiltern der Durchmesser der Filterkanäle im Bereich der Durchmesser der Partikel liegt.

Infolge dieses Unterschiedes sind Partikelfilter verstopfungsgefährdet, was den Abgasgegendruck erhöht und die Motorleistung mindert. Eine Anordnung und ein Verfahren mit Partikelfilter ist der EP 0 341 832 A2 zu entnehmen. Die beiden vorgenannten Anordnungen bzw. Verfahren zeichnen sich dadurch aus, dass der jeweils stromauf zum Partikelabscheider bzw. Partikelfilter angeordnete Oxidationskatalysator - zumeist ein Katalysator mit Platin als Aktivmaterial - das Stickstoffmonoxid im Abgas mit Hilfe des ebenfalls enthaltenen Restsauerstoffes nach der Beziehung (2) zu Stickstoffdioxid oxidiert. Dabei ist zu beachten, dass das Gleichgewicht der obigen Reaktion bei hohen Temperaturen auf der Seite von NO liegt. Dies hat zur Folge, dass die erzielbaren NO₂-Anteile bei hohen Temperaturen auf Grund dieser thermodynamischen Begrenzung limitiert sind.

Dieses NO₂ setzt sich wiederum im Partikelabscheider, bzw. Partikelfilter mit den Kohlenstoffpartikeln zu CO, CO₂, N₂ und NO um.

Mit Hilfe des starken Oxidationsmittels NO₂ erfolgt eine kontinuierliche Entfernung der angelagerten Feinstoffpartikel, Regenerationszyklen, wie sie aufwändig bei anderen Anordnungen durchgeführt werden müssen, entfallen dadurch. Man spricht daher von einer "passiven" Regeneration.

2NO₂ + C ⇒ 2 NO + CO₂ (4)

2 NO₂ + C ⇒ 2 NO + CO (5)

2 C + 2 NO₂ ⇒ N₂ + 2CO₂ (6)

Gelingt keine vollständige Oxidation des im Partikelfilter eingelagerten Kohlenstoffs mit Hilfe von NO₂, so steigt der Kohlenstoffanteil und damit der Abgasgegendruck stetig an.

Um dies zu vermeiden, werden aktuell die Partikelfilter vermehrt mit einer katalytischen Beschichtung zur Oxidation von NO versehen. Dabei handelt es sich meist, wie bereits oben beschrieben, um platinhaltige Katalysatoren. Der Nachteil dieses Verfahrens besteht allerdings darin, dass das am Partikelfilter gebildete NO₂ nur zur Oxidation von Partikeln dienen kann, die stromab der katalytisch aktiven Schicht zur NO-Oxidation abgeschieden wurden, also innerhalb des Filtermediums. Bildet sich dagegen auf der Filteroberfläche und damit auf der katalytisch aktiven Schicht eine Schicht aus abgeschiedenen Partikeln, ein sogenannter Filterkuchen, aus, so liegt der NO-Oxidationskatalysator stromab des Filterkuchens, so dass die dort abgeschiedenen Russpartikel nicht mit Hilfe von NO₂ aus dem auf dem Partikelfilter aufgebrachten NO-Oxidationskatalysator oxidiert werden können.

Hinzu kommt noch, dass genau genommen, nur die auf der Rohgasseite aufgebrachte Katalysatorschicht zur Performance des Systems beiträgt, da das auf der Reingasseite katalytisch gebildete NO₂ nicht mehr in Kontakt mit dem auf der Rohgasseite und innerhalb des Filtermaterials abgeschiedenen Ruß kommen kann.

Ein weiteres Problem der Beschichtung des Partikelfilters ist, dass die geometrischen Oberflächen des Filters deutlich geringer als die der üblicherweise eingesetzten Katalysatorsubstrate sind. Der Grund hierfür liegt darin, dass die Filter relativ große freie Querschnitte und damit freies Volumen auf der Rohgasseite benötigen, um Ruß und Motorölasche einzulagern. Werden keramische Filtersubstrate eingesetzt, wird dies durch eine geringe Zelligkeit von 50cpsi-200cpsi realisiert. Demgegenüber werden reine Katalysatoren üblicherweise mit Zelldichten von 400cpsi-900cpsi ausgeführt. Durch die Anhebung von 50cpsi auf 900cpsi ergibt sich eine Erhöhung der geometrischen Oberfläche von 1m²/l auf 4m²/l, wodurch erhebliche Umsatzsteigerungen an den Katalysatoren möglich werden.

Aus diesen Gründen kann trotz der katalytischen Beschichtung des Filters nicht auf einen NO-Oxidationskatalysator vor dem Partikelfilter verzichtet werden, so dass sich ein relativ großes Bauvolumen ergibt. Dies ist selbst dann der Fall, wenn die NO-Oxidationskatalysatoren und die Partikelfiltern eine bauliche Einheit bilden, indem der Eintrittsbereich des Partikelfilters als NO-Oxidationskatalysator ausgeführt ist (DE10327030 A1).

Obwohl durch diese Maßnahmen eine Russoxidation noch bis zu Temperaturen von 250°C möglich ist, gibt es dennoch Anwendungsfälle, in denen selbst diese Abgastemperaturen nicht erreicht werden und somit keine sichere Funktion des Partikelfilters sichergestellt werden kann. Dies tritt üblicherweise bei schwachbelasteten und in Fahrzeugen verbauten Motoren auf, beispielsweise bei Personenkraftwagen, Linienbussen oder Müllfahrzeugen, die noch zusätzlich hohe Leerlaufanteile aufweisen.

Daher wird, speziell in solchen Fällen, eine zweite Möglichkeit der Partikelfilterregeneration angewendet: Sie besteht darin, die Abgastemperatur aktiv anzuheben. Dies gelingt üblicherweise durch die Zugabe von Kohlenwasserstoffen stromauf von Oxidationskatalysatoren. Durch die exotherme Oxidation der Kohlenwasserstoffe an den Katalysatoren kommt es zu einem deutlichen Temperaturanstieg.

Gelingt dadurch eine Temperaturanhebung auf über 600°C, kommt es zu einer Oxidation des Kohlenstoffs mit Hilfe von Sauerstoff.

C + O₂ ⇒ CO₂ (7)

Allerdings besteht bei dieser sogenannten "aktiven" Filterregeneration die Gefahr, dass es durch das Abbrennen des Rußes zu einem starken Temperaturanstieg auf bis zu 1000°C und damit meist zur Schädigung des Partikelfilters und/oder nachgeschalteter Katalysatoren kommt.

Da die Temperaturerhöhung für mehrere Minuten aufrechterhalten werden muss, um eine quantitative Oxidation der Russpartikel sicherzustellen, ist der Bedarf an Kohlenwasserstoffen nicht unerheblich und verschlechtert, da üblicherweise der Kraftstoff der Brennkraftmaschine als Kohlenwasserstoffquelle verwendet wird, deren Wirkungsgrad.

Die Zugabe der Kohlenwasserstoffe kann durch eine, im Abgastrakt angebrachte, separate Einspritzdüse erfolgen. Eine weitere Möglichkeit besteht darin, über eine späte Nacheinspritzung des Kraftstoffs in den Brennraum, hohe Kohlenwasserstoffemissionen zu generieren.

Um die zukünftig geltenden Abgasbestimmungen zu erfüllen, ist der gleichzeitige Einsatz sowohl von Anordnungen zur Reduzierung der Stickoxidemission, als auch von Anordnungen zur Reduzierung der Feinstoffpartikelemission erforderlich.

Eine Lösung besteht darin, den Partikelfilter mit SCR-aktivem Material zu beschichten (JP 2004-376102) oder mit SCR-aktivem Material zu imprägnieren, so dass der Partikelfilter und der SCR-Katalysator irreversibel eine Einheit bilden, also nicht zerstörungsfrei voneinander getrennt werden können. Hierbei gestaltet sich allerdings der Einsatz von V₂O₅ als SCR-Aktivkomponente als schwierig. Der Grund hierfür liegt in der geringen thermischen Stabilität dieser Katalysatoren. So kommt es bei Abgastemperaturen von über 650°C zur Sublimation von V₂O₅. Da diese Temperaturen, wie bereits oben beschrieben, an Partikelfiltern durchaus auftreten können, werden für diese Hochtemperaturanwendungen V₂O₅-freie, übergangsmetallhaltige, insbesondere eisen-, kobalt- oder kupferhaltige, Katalysatoren eingesetzt. Als besonders vorteilhaft hat es sich in diesem Zusammenhang erwiesen, diese Übergangsmetalle durch Ionenaustauch in Zeolithe zu integrieren (DE 3 912 596 C2). Auf Grund der sehr großen Oberfläche der Zeolithe gelingt dadurch eine erhebliche Vergrößerung der aktiven Oberfläche und damit eine deutliche Steigerung der erreichbaren Umsätze.

Der Nachteil dieser übergangsmetallhaltigen Katalysatoren liegt allerdings darin, dass sie unter Anwesenheit von Chlorid und Kohlenwasserstoffen im Temperaturbereich zwischen 200-400°C hochtoxische polychlorierte Dibenzo-Dioxine (PCDD) und polychlorierte Dibenzo-Furane (PCDF) bilden.

Im Fahrzeug gelangt das für die Dioxinbildung notwendige Chlorid z. B. über Biokraftstoffe, das Motorenöl oder die Ansaugluft (Salzstreuung im Winter, Fahren in Küstennähe) in das Abgas und damit an die Katalysatoren.

Die für die Bildung von PCDD und PCDF notwendigen Kohlenwasserstoffe sind auf Grund der unvollständigen Verbrennung des Kraftstoffs ohnehin im Abgas enthalten.

Der Erfindung liegt die Aufgabe zugrunde, eine Vorrichtungen nach dem Oberbegriff des Anspruches 1 anzugeben die PCDD-, PCDF- Emissionen ebenso verringert, wie die Emissionen von Partikeln und gegebenenfalls NOₓ, sowie ein Herstellverfahren für eine solche Vorrichtung

Die erfindungsgemäße Vorrichtung löst das Problem der Emission von polychlorierten Di-benzo-Dioxinen und polychlorierten Di-benzo-Furanen, die an mindestens einem übergangsmetallhaltigen Katalysator entstanden sind, wobei der übergangsmetallhaltige Katalysator auf einem Partikelfilter, der in der Abgasableitung einer Brennkraftmaschine verbaut ist, angebracht ist und von diesem nicht zerstörungsfrei getrennt werden kann, gemäß dem kennzeichnenden Teil des Anspruchs 1, vorteilhafte Ausgestaltungen der erfindungsgemäßen Vorrichtung sind in den Unteransprüchen 2 bis 21 gekennzeichnet. Ein Verfahren zur Herstellung der erfindungsgemäßen Vorrichtung findet sich im Anspruch 22.

Der Grundgedanke besteht darin, den Partikelfilter zwar mit einem übergangsmetallhaltigen Katalysator, z.B. SCR- Katalysator, auszustatten, aber die Emissionen von, an diesem gebildeten, PCCD und PCDF zu verhindern. Dies gelingt in vorteilhafter Weise dadurch, dass die Vorrichtung in Richtung der Reingasseite und stromab des übergangsmetallhaltigen Katalysators mindestens ein Molekularsieb, z.B. eine als Molekularsieb wirkende Schicht, aufweist, die der Abgasstrom passieren muss. Die Porendurchmesser des Molekularsiebs, bzw. der Molekularsieb-Schicht, sind so ausgelegt, dass die großen PCDD- und PCDF- Moleküle diese nicht passieren können, während dies für die kleineren und unschädlichen Abgasbestandteile wie Sauerstoff, Stickstoff, Kohlendioxid, Stickoxide, Wasser und Kohlenmonoxid möglich ist.

Dies gelingt, da die kleineren und unschädlichen Abgasbestandteile Durchmesser von 1,5Å - 3Å aufweisen, während die Durchmesser für die aromatischen Kohlenwasserstoffe, Dioxine und Furane bei 12Å -26Å liegen, d.h. die Porendurchmesser des Molekularsiebs sind vorteilhaft zwischen 3Å und 12Å zu wählen.

Die definierten Porendurchmesser des Molekularsiebs lassen sich relativ einfach und damit vorteilhaft durch die Verwendung von Zeolithen darstellen. Durch die gezielte Anordnung der AlO₄- und SiO₄-Tetraeder können unterschiedliche Gitterkonstanten sowie Strukturen und damit Kanalquerschnitte erzeugt werden. Außerdem ist der Einsatz von Silikaten, Metallsilikaten, Aluminaten, Metallaluminaten, Silicophosphaten, Metallsilicophosphaten, Silicoaluminophosphaten, Aluminophosphaten, Metallaluminophosphaten und Aluminiumsilikaten als Molekularsieb möglich.

Für das Molekularsieb haben sich Gitterstrukturen vom Typ AEN, OSI, EPI, ERI, FER, FAU, OFF, MFI, LTL, VFI, MAZ, MEI, EMT, CHA, KFI, BEA, MFS, MEL, MTW, EUO, MTT, HEU, FER, TON und MOR als besonders vorteilhaft erwiesen. Die vorstehend genannten Bezeichnungen entsprechen der IZA-Nomenklatur, IZA steht dabei für International Zeolite Association.

Soll das Molekularsieb als Zeolith ausgeführt werden, beinhalten diese vorgenannten Gitterstrukturen u. a. die Zeolithe Mordenith, Epistilbit, Chabazit, Erionit, Mazzit, Ferrierit, Faujasit, Offretit, ZSM-5, ZSM-4, ZSM-5, ZSM-12, ZSM-18, ZSM-20, ZSM-22, ZSM-23, ZSM-34, ZSM-35, ZSM-38, ZSM-48, ZSM-50, Omega, Beta, Zeolith A, Zeolith L, Zeolith Y, Zeolith X, ZK-4, ZK-5, ZK-14, ZK-20, ZK-21 und ZK22. Zur Erzeugung des Molekularsiebs können daher die vorgenannten Zeolithe in vorteilhafter Weise einzeln oder in beliebiger Kombination verwendet werden.

Die mittlere Dicke des Molekularsiebs, bzw. der Molekularsieb-Schicht, sollte dabei mindestens 3Å betragen, um ein ausreichendes Rückhalten der PCDD- und PCDF- Moleküle zu gewährleisten. Gleichzeitig sollte die Dicke aber nicht mehr als 5µm betragen, da es ansonsten zu einem erheblichen Anstieg des Abgasgegendrucks kommt. Demgegenüber liegt die Schichtdicke der Katalysatorschicht bei einem, durch Beschichtung realisierten Katalysator zwischen 5µm - 500 µm.

Zur Verbesserung der NOₓ- Umsätze am Katalysator ist es sinnvoll, die Aktivkomponenten Kupfer und/oder Eisen und/oder Kobalt ebenfalls in eine Zeolithmatrix zu integrieren. Werden Katalysatorschicht und Molekularsieb-Schicht mittels Zeolithen realisiert, ist allerdings darauf zu achten, dass die Molekularsieb-Schicht, wenn überhaupt, nur geringe Mengen Kupfer oder Eisen oder Kobalt enthält. Da Kupfer eine höhere PCDD- Bildungsrate als Eisen aufweist, kann es sinnvoll sein, eine kupferhaltige Katalysator- und eine eisenhaltige Molekularsieb-Schicht zu kombinieren.

Zusätzlich muss berücksichtigt werden, dass, im Gegensatz zum Molekularsieb, bzw. zur Molekularsieb-Schicht, das Abgas nicht durch die Zeolithporen der Katalysatorschicht gezwungen werden sollte. Vielmehr sollte es an ihnen vorbeiströmen und die Reaktanden nur über Diffusionsvorgänge in die Zeolithporen eindringen, da andernfalls auf Grund der großen Schichtdicke der Abgasgegendruck erheblich ansteigen würde.

Dies kann z.B. durch eine hohe Porosität der übergangsmetallhaltigen Katalysatorschicht erreicht werden. Erzeugt werden kann eine solche hohe Porosität beispielsweise durch die Beimischung von Füllstoffen zum Washcoat, die sich bei der Kalzinierung verflüchtigen oder durch die Beimischung von zeolithfreien Washcoatzusätzen hoher Porosität oder die Beimischung von Zeolithtypen hoher Porosität und/oder großer Porendurchmesser. Eine weitere Möglichkeit besteht bei hochporösem Filtersubstrat darin, eine dünne und das Filtersubstrat nicht komplett abdeckende bzw. verschließende Beschichtung auf das Filtermaterial aufzubringen, so dass nach dem Beschichten innerhalb des Filtersubstrats noch freie Strömungskanäle vorhanden bleiben.

Auf Grund all dieser Maßnahmen dringen die Reaktanden in Folge von Diffusions- und nicht von Konvektionsvorgängen in die Zeolithporenstruktur des Katalysators ein.

Die Zeolithtypen des Katalysators und die des Molekularsiebs, bzw. der Molekularsieb-Schicht, sind, auf Grund der oben beschriebenen Gegendruckproblematik, üblicherweise unterschiedlich. Insbesondere sind die Porendurchmesser des Molekularsiebs, bzw. der Molekularsieb-Schicht, kleiner als die der Katalysatorschicht. Aus diesem Grund werden für die Katalysatorschicht üblicherweise die Zeolithe mit der Gitterstruktur MFI und/oder BEA eingesetzt.

Die Herstellung von zeolithhaltigen Katalysatoren wird in DE 3912596 C2, EP 0311066 A2 und EP 003486 A1 beschrieben und ist damit bekannt.

Generell muss vermieden werden, dass sich die Dioxine und Furane sowie langkettige Kohlenwasserstoffe am Molekularsieb, bzw. an der Molekularsieb-Schicht, anreichern und dadurch zum Verstopfen des Siebs führen. Daher muss dem System aus Partikelfilter, übergangsmetallhaltigem Katalysator, wie er z.B. für die SCR-Reaktion eingesetzt wird, und Molekularsieb, eine Oxidationsaktivität für PCDD, PCDF und Kohlenwasserstoffe aufgeprägt werden. Dies kann vorteilhaft auf mehrere Arten erfolgen.

Zum einen ist es möglich, zwischen dem übergangsmetallhaltigen Katalysator, z.B. SCR- Katalysator und dem Molekularsieb, bzw. der Molekularsieb-Schicht, eine weitere Schicht anzuordnen, die Aktivkomponenten enthält, die eine PCDD-, PCDF- und Kohlenwasserstoff-Oxidationsaktivität besitzen. Die Porosität dieser Schicht ist analog der des Partikelfilters bzw. des übergangsmetallhaltigen Katalysators einzustellen.

Andererseits besteht die Möglichkeit, das Molekularsieb, bzw. die Molekularsieb-Schicht, zumindest an ihrer dem übergangsmetallhaltigen Katalysator, z.B. SCR-Katalysator zugewandten Oberfläche zusätzlich mit Aktivkomponenten, die eine Oxidation von PCDDs, PCDFs und Kohlenwasserstoffen ermöglichen, zu versehen. Da die Kohlenwasserstoffe, Dioxine bzw. Furane das Molekularsieb, bzw. die Molekularsieb-Schicht nicht passieren können, ist die Verweildauer im Bereich des, die Oxidation bewirkenden Materials ausreichend lang, um eine Zersetzung zu bewirken.

Bei Einbindung der, die Oxidation von Kohlenwasserstoffen, PCDDs und PCDFs bewerkstelligenden Elemente in eine Zeolithstruktur erhöhen sich auf Grund der hohen Dampfdrücke innerhalb der Porenstruktur die Sublimationstemperaturen erheblich, so dass bis zu 750°C selbst der Einsatz von Vanadium innerhalb des Molekularsiebs, bzw. der Molekularsieb-Schicht möglich wird.

Eine weitere Möglichkeit, der Anordnung eine Kohlenwasserstoff-, PCDD- und PCDF- Oxidationsaktivität aufzuprägen, besteht darin, den übergangsmetallhaltigen Katalysator, z.B. SCR-Katalysator, mit einer Oxidationsaktivität für Kohlenwasserstoffe, Dioxine und Furane zu versehen. Da Dioxine, Furane und Kohlenwasserstoffe durch die Molekularsieb-Schicht den übergangsmetallhaltigen Katalysator nicht verlassen können, ist die Verweilzeit dieser Stoffe im Katalysator sehr hoch, so dass auch geringe Oxidationsaktivitäten, ausreichen, die Zersetzung der Kohlenwasserstoffe, Dioxine bzw. Furane zu bewirken.

Als Aktivkomponenten zur Oxidation der Kohlenwasserstoffe, der chlorierten Dioxine und chlorierten Furane kommen bei allen drei Möglichkeiten, neben dem bereits erwähnten Vanadium, andere Übergangsmetalle, wie Wolfram, Titan, Lanthan, Molybdän, Cer oder Mangan, sowie Elemente der Platinmetallgruppe in Frage. Allerdings ist bei der Zugabe dieser Elemente zu übergangsmetallhaltigen Katalysatoren darauf zu achten, dass es nicht zu einer Beeinträchtigung der Aktivität des Katalysators für die Umsetzung anderer Abgaskomponenten kommt. Dies ist besonders beim SCR-Verfahren kritisch, da eine Oxidation von Ammoniak vermieden werden muss. Ansonsten würde keine ausreichende Menge NH₃ mehr zur Verfügung stehen, um die Stickoxide, gemäß den Gleichungen 1 und 3, zu reduzieren.

Die Herstellung der Anordnung kann vorteilhaft so erfolgen, dass der übergangshaltige Katalysator, z.B. SCR- Katalysator, zunächst durch, gegebenenfalls mehrmalige, Beschichtung auf einem keramischen oder metallischen Partikelfilter aufgebracht wird. Nach der Trocknung und/oder Kalzinierung des Katalysators wird in einem weiteren Arbeitsschritt die Molekularsieb- und/ oder die Kohlenwasserstoff-, PCDD- bzw. PCDF-Oxidationsschicht ausgebildet. Hierfür stehen mehrere unterschiedliche Verfahren zur Auswahl.

Zum einen ist die Aufbringung einer Molekularsieb-Schicht auf der, der Reingasseite zugewandten Seite der Filterwände und/oder des übergangsmetallhaltigen Katalysators, ähnlich der Beschichtung von Substraten mit Katalysatorwashcoat, in vorteilhafter Weise möglich. Anschließend muss diese Schicht, analog zu den Katalysatoren, getrocknet und kalziniert werden, um eine stabile und feste Verbindung zwischen der Molekularsieb-Schicht, Filtersubstrat und dem übergangsmetallhaltigen Katalysator sicherstellen zu können. Werden für die Molekularsieb-Schicht Zeolithe eingesetzt, bietet sich die Beschichtung mit Hilfe einer zeolithhaltigen Suspension an.

Die Molekularsieb-Schicht kann zusätzlich Aktivkomponenten, die eine Oxidation von Kohlenwasserstoffen und/oder PCDD bzw. PCDF ermöglichen, enthalten. Wie bereits oben erwähnt, lassen sich dazu unter anderem Elemente der Platinmetallgruppe, Wolfram, Titan, Lanthan, Molybdän, Cer, Mangan oder Vanadium vorteilhaft einsetzen. Die Oxidation von Kohlenwasserstoffen, PCDD bzw. PCDF findet dabei natürlich nur an der, der Reingasseite abgewandten Oberfläche der Molekularsieb-Schicht statt, weil die Kohlenwasserstoff-, PCDD- bzw. PCDF-Moleküle nicht in die Molekularsieb-Schicht eindringen können.

Wird zwischen dem übergangsmetallhaltigen, z.B. SCR-Katalysator und der Molekularsieb-Schicht eine weitere Schicht mit Kohlenwasserstoff-, PCDD- und PCDF-Oxidationsaktivität angebracht, so kann diese, analog zur Ausbildung der Molekularsieb-Schicht, durch eine Beschichtung der, der Reingasseite zugewandten Seite der Filterwände und/oder des übergangsmetallhaltigen Katalysators erfolgen. Die mittlere Dicke einer derart aufgebrachten Schicht liegt üblicherweise im Bereich von 0,5 µm - 5µm.

Eine weitere vorteilhafte Möglichkeit besteht darin, den übergangsmetallhaltigen Katalysator, z.B. SCR- Katalysator, in Richtung der Reingasseite mit den gewünschten Aktivkomponenten zur Kohlenwasserstoff PCDD-/ PCDF- Oxidation zu imprägnieren.

Darüber hinaus ist es in vorteilhafter Weise möglich, zur Herstellung einer besonders dünnen Kohlenwasserstoff-/ PCDD-/ PCDF- Oxidationsschicht, vor allem bei der Verwendung von zeolithhaltigen Katalysatoren, die Konzentration mindestens eines Übergangsmetalls an der, der Reingasseite zugewandten Katalysatoroberfläche durch Ionenaustausch gegen ein anderes Ion, das eine Kohlenwasserstoff-, PCDD- oder PCDF- Oxidationsaktivität besitzt, zu substituieren. Im einfachsten Fall gelingt dies durch Einbringen eines aciden Fluids. Dadurch werden die Übergangsmetallionen in der Zeolithstruktur durch Protonen aus dem sauren Fluid ersetzt. Anschließend werden die Protonen wiederum gegen Metallkationen mit Oxidationsaktivität ausgetauscht. Wie bereits oben beschrieben, bieten sich hierfür Elemente der Platinmetallgruppe, Wolfram, Titan, Lanthan, Molybdän, Cer, Mangan oder Vanadium an. Je nach Affinität dieser Elemente kann auf den Zwischenschritt der Protonierung verzichtet werden und durch Wahl eines geeigneten pH-Werts die Übergangsmetalle direkt gegen andere Metalle ausgetauscht werden. Durch Ionenaustausch hergestellte Oxidationsschichten können extrem dünn ausgeführt werden, so dass deren mittlere Schichtdicke üblicherweise zwischen 3Å und 1 µm liegt.

Allen drei Herstellverfahren zur Ausbildung der Kohlenwasserstoff- /PCDD- /PCDF- Oxidationsschicht folgt anschließend die bereits oben beschriebene Ausbildung der Molekularsieb-Schicht.

Als Partikelfilter können Substrate aus Metall und/oder Sintermetall und/oder Keramik und/oder Schaum und/oder Keramikfasern und/oder Quarzfasern und/oder Glasfasern und/oder Siliziumcarbid und/oder Aluminiumtitanat verwendet werden.

Ist ein Aufbringen der Molekularsieb-Schicht auf die Filterwand nicht möglich, so ist auch ein Anbringen der Molekularsiebs innerhalb des durchströmten, reingasseitigen Filterbereichs möglich. Bei wabenförmig aufgebauten Filtern, deren Ein- und Auslasskanäle wechselseitig verschlossen sind, gelingt dies in vorteilhafter Weise durch Verschließen der Auslasskanäle mit einem Molekularsieb. Dieses kann, zu Verbesserung der mechanischen Stabilität, auf einer Trägerstruktur, z.B. als Schicht, aufgebracht sein.

Der Nachteil dieses Verfahrens besteht allerdings in der geringen durchströmten Molekularsiebfläche, was hohe Abgasgegendrücke zur Folge hat. Daher bietet sich auch die Ausbildung eines separaten Bauteils als Molekularsieb an, dessen durchströmte Flächen durch spezielle Formgebung vergrößert sind. Dies gelingt beispielsweise durch eine wabenförmige Struktur mit parallelen Strömungskanälen, die wechselseitig, ähnlich einem keramischen Partikelfiltersubstrat, verschlossen sind. Dadurch wird der Abgasstrom durch die Wände des Substrats gezwungen. Die Wände können dabei komplett aus dem Molekularsiebmaterial bestehen, praktisch wird es aber wegen der geforderten geringen Schichtdicke des Molekularsiebs von Vorteil sein, die Wände aus einem porösen Trägermaterial zu fertigen und nachträglich mit dem Molekularsiebmaterial zu beschichten.

Obwohl in der vorangegangenen Beschreibung auf Katalysatoren zur selektiven katalytischen Reduktion abgehoben wurde, lässt sich das Verfahren bei allen Katalysatoren, bei denen eine PCDD- und/oder PCDF- Bildung beobachtet wird, anwenden.

Nachfolgend soll die erfindungsgemäße Vorrichtung anhand von Figuren näher erläutert werden:
Fig 1: Prinzipieller Aufbau eines übergangsmetallhaltigen SCR- Systems mit nachgeschaltetem Molekularsieb
Fig 2: Partikelfilter mit übergangsmetallhaltigem Katalysator auf der Rohgasseite und einer Molekularsieb-Schicht auf der Reingasseite
Fig 3: Partikelfilter mit übergangsmetallhaltigem Katalysator und einer Molekularsieb-Schicht auf der Reingasseite
Fig 4: Partikelfilter mit übergangsmetallhaltigem Katalysator und einer Molekularsieb-Schicht auf der Reingasseite sowie einer Schicht mit Kohlenwasserstoff-, PCDD- und PCDF- Oxidationsaktivität zwischen der Katalysator- und der Molekularsieb-Schicht
Fig 5: Partikelfilter mit übergangsmetallhaltigem Katalysator auf der Reingasseite und einer Molekularsieb-Schicht am Ausgang des Reingaskanals

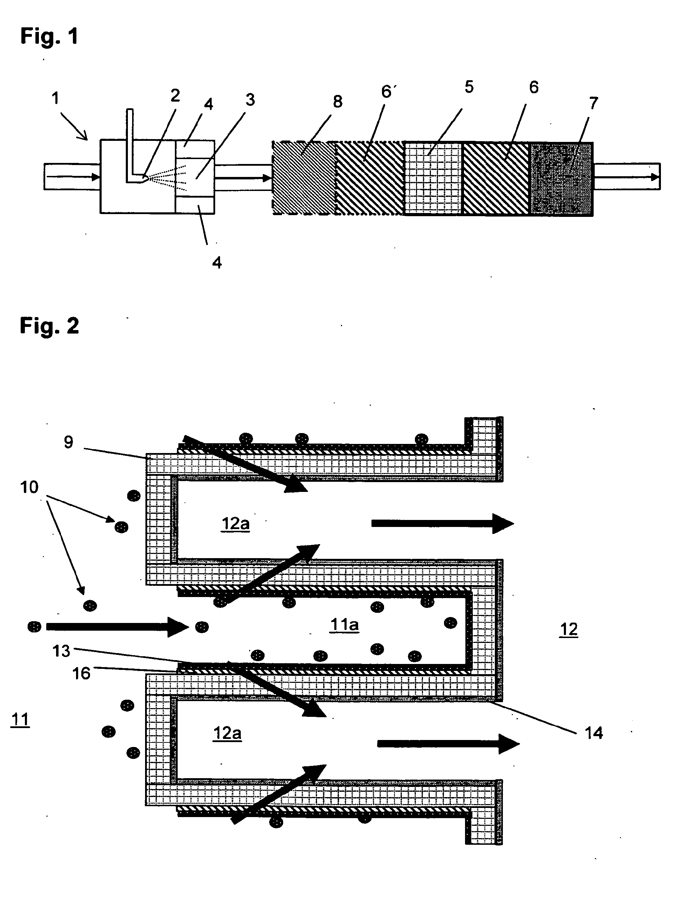

Ein Abgasnachbehandlungssystem zur selektiven katalytischen Reduktion und zur Reduzierung von Feststoffpartikeln im Abgas einer Brennkraftmaschine ist schematisch dargestellt in Fig. 1 gezeigt. Die von einer Brennkraftmaschine (nicht dargestellt) durch die Verbrennungsvorgänge erzeugten Abgase, in Fig. 1 durch die Pfeile symbolisiert, gelangen zunächst in einen Abgasaufbereitungstrakt 1, in welchem dem heißen Abgas ein Reduktionsmittel möglichst motomah beigegeben wird. Bei dem Reduktionsmittel handelt es sich, wie bei Kraftfahrzeugen mit SCR-Katalysator in der Praxis gebräuchlich, um eine wässrige Harnstofflösung, selbstverständlich ist aber auch die Zugabe von Harnstoff in fester Form denkbar, wie dies in der einschlägigen Fachliteratur bereits ausführlich beschrieben ist. Weiter ist es möglich als Reduktionsmittel Ammoniak zuzugeben, der an anderer Stelle, z.B. unter günstigeren thermischen Bedingungen, aus einem Ammoniak abspaltenden Stoff gewonnen wird. Die Zumessung erfolgt in Abhängigkeit von Betriebsparametern der Brennkraftmaschine, gesteuert über eine Motorsteuereinheit (nicht dargestellt), in der Weise, dass über eine Düse 2 die wässrige Harnstofflösung in einen Abgasteilstrom 3 eingesprüht wird. Parallel zum Abgasteilstrom 3 ist ein Oxidationskatalysator 4 angeordnet, dessen Aufgabe darin besteht, nach der vorstehend mit (2) bezeichneten Reaktion einen Teil des im Abgas enthaltenen Stickstoffmonoxides mittels des im Abgas vorhandenen überschüssigen Sauerstoffes zu Stickstoffdioxid aufzuoxidieren. Verwendet wird das so erzeugte Stickstoffdioxid einerseits bei der Reduktion der Feststoffpartikel und andererseits bei der nachgeordneten SCR-Reaktion, wie dies nachfolgend noch näher beschrieben ist.

Stromab zum Abgasteilstrom 3 und dem parallel zu diesem angeordneten Oxidationskatalysator 4 ist ein Partikelfilter 5 angeordnet, der die im Abgas befindlichen Rußpatikel anlagert. Die so im Partikelfilter 5 festgehaltenen Rußpartikel werden durch das stromauf mit Hilfe des Oxidationskatalysators 4 erzeugte Stickstoffdioxid zu Kohlenmonoxid, Kohlendioxid, Stickstoff und Stickstoffmonoxid kontinuierlich umgesetzt, so dass aufwändige Regenerationszyklen für den Partikelfilter 5 entfallen.

Die eigentliche selektive katalytische Reduktion der Stickoxide erfolgt durch einen SCR-Katalysator 6, der in Figur 1 der Einfachheit halber zwar schematisch als separates Bauteil eingezeichnet ist, aber, wie weiter unten beschrieben, erfindungsgemäß als SCR-aktive Beschichtung oder Imprägnierung des Partikelfilters 5 ausgeführt ist. In der angesprochenen Reduktionsreaktion soll ein möglichst großer Anteil der im Abgas vorhandenen Stickoxide (NOₓ), bei gleichzeitiger hoher Selektivität der Reduktion, in Stickstoff und Wasserdampf übergeführt werden, ohne dass überschüssiger Ammoniak (NH₃) im Abgasstrom verbleibt. Bei der angesprochenen SCR-Reduktionsreaktion ist das eventuell noch im Abgasstrom vorhandene restliche Stickstoffdioxid reaktionsfreudiger als das restliche im Abgas enthaltene NO, es ist demnach wünschenswert, den Oxidationskatalysator 4 so auszulegen, dass ein möglichst hoher Anteil an Stickstoffmonoxid in Stickstoffdioxid übergeführt wird, also nach Möglichkeit mehr als zur Umsetzung der Rußpartikel im Partikelabscheider nötig ist. Durch die stark exotherme Rußoxidation kann es zu einem deutlichen Temperaturanstieg kommen, so dass stromab des Partikelabscheiders durchaus Temperaturen oberhalb von 650°C, die zu einer Schädigung V₂O₅-haltiger SCR-Katatalysatoren führen, auftreten können. Aus diesem Grund werden als Aktivkomponten meist eisen-, kobalt- oder kupferhaltige Zeolithmaterialien verwendet.

Wie bereits oben ausgeführt, bilden sich unter Anwesenheit von Chlorid und Kohlenwasserstoffen im Temperaturbereich zwischen 200-400°C an übergangsmetallhaltigen Katalysatoren hochtoxische polychlorierte Dibenzo-Dioxine (PCDD) und polychlorierte Dibenzo-Furane (PCDF), die den Abgastrakt in dieser Form nicht verlassen dürfen. Aus diesem Grund ist auf der Abströmseite des Partikelfilter 5 ein Molekularsieb 7 angeordnet, das die Emission von Dioxinen und Furanen verhindert. Um ein Verstopfen des Molekularsiebs mit Dioxinen, Furanen oder Kohlenwasserstoffen zu vermeiden ist das Molekularsieb mit einer PCDD- und/oder PCDF- und/oder Kohlenwasserstoffoxidationsaktivität ausgestattet. Dies gelingt durch den Einsatz von Wolfram, Titan, Lanthan, Molybdän, Cer, Mangan und/oder Elementen der Platinmetallgruppe.

Wie in Figur 1 weiter mit gestrichelter Umfangslinie eingezeichnet, kann zur Verbesserung der Abspaltung des Ammoniaks aus dem Reduktionsmittel ein Hydrolysekatalysator 8 zum Einsatz kommen, wenn das Temperaturniveau an der Zuführstelle für das Reduktionsmittel nicht hoch genug ist. Dieser Hydrolysekatalysator 8, im Abgasstrom stromab zur Zuführstelle des Reduktionsmittels und stromauf zum Partikelfilter 5 angeordnet, ist in der Zeichnung zwar ebenfalls schematisch als separates Bauteil eingezeichnet, kann aber auch eine Beladung auf der Anströmseite des Partikelfilters 5 mit entsprechend aktivem Katalysatormaterial sein.

Weiter ist in Figur 1 stromauf zum Partikelfilter 5 ebenfalls mit gestrichelter Umfangslinie ein weiterer SCR-Katalysator 6'eingezeichnet. Dieser kann alternativ, aber auch zusätzlich zum SCR-Katalysator 6 eingesetzt sein. Auch der SCR-Katalysator 6' ist in der Prinzipanordnung nach Figur 1 als separates Bauteil gezeigt, kann aber, wie weiter unten gezeigt, durch eine Beladung auf der Anströmseite des Partikelfilters 5 mit entsprechend aktivem Katalysatormaterial gebildet sein.

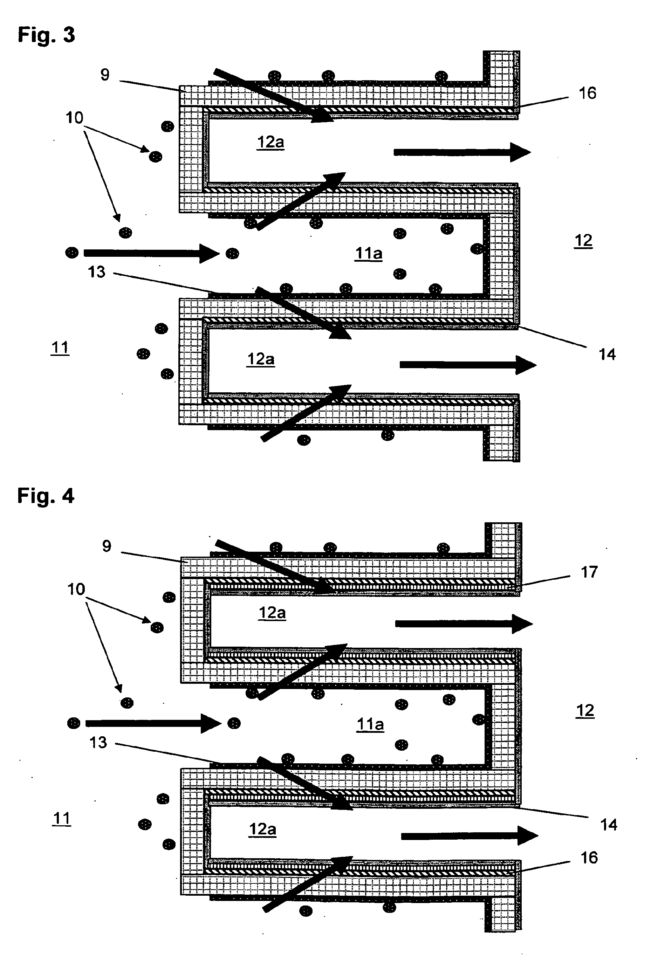

Die Ausführung eines Partikelfilters mit SCR-Aktivität und PCDD- bzw. PCDF-Sperr- und Oxidationswirkung zeigt Fig. 2, ebenfalls schematisch, in Schnittdarstellung, wobei die Schnittebene parallel zur Strömungsrichtung des Abgases gewählt ist. Die Strömungsrichtung ist dabei, ebenso wie in den weiter unten beschriebenen Figuren 3 bis 5 durch Pfeile veranschaulicht.

Die Partikelfilterschicht 9 weist sowohl auf seiner Anströmseite 11 als auch auf seiner Abströmseite 12 sacklochartige oder taschenförmige Kammern 11 a, 12a auf, wobei die auf der Anströmseite 11 gelegenen zur Anströmseite 11 hin und die auf der Abströmseite 12 gelegenen zur Abströmseite 12 hin offen sind. Als Filtermaterial für die Partikelfilterschicht 9 können Cordierit oder Siliziumcarbid aber auch Sintermetall oder keramischen Fasern sowie Silikatfasern, Metallgestricke, Aluminiumtitanat oder Schäume eingesetzt werden.

Auf der Anströmseite 11 ist die Partikelfilterschicht 9 mit einer übergangsmetallhaltigen SCR-Katalysatorschicht 16 versehen, während sie auf ihrer Abströmseite 12 eine Molekularsieb-Schicht 14 trägt.

Wie in der Darstellung erkennbar, trifft der mit Rußpartikeln 10, mit Stickoxiden (nicht dargestellt), mit Ammoniak (NH₃) (nicht dargestellt) und mit Kohlenwasserstoffen und Clorid (nicht dargestellt), den Vorläufersubstanzen von PCDD bzw. PCDF, beladene Abgasstrom auf die Anströmseite 11 der Partikelfilterschicht 9 und lagert die Rußpartikel 10 insbesondere in den sacklochartigen oder taschenförmigen Kammern 11a als sogenannten Filterkuchen 13 an, während das so von Rußpartikeln 10 gereinigte Abgas durch das Filtermaterial auf die sackloch- oder taschenartigenartigen Kammern 12a der Abströmseite 12 zuströmt. Vor dem Erreichen der Kammern 12a durchströmt das mit NH₃ beladene Abgas die auf der Anströmseite 11 der Partikelfilterschicht 9 gelegene, mit übergangsmetallhaltigem SCR-aktivem Katalysatormaterial beladene SCR-Katalysatorschicht 16. Auf dem Weg durch die mit SCR-aktivem Katalysatormaterial beladene SCR-Katalysatorschicht 16 findet die selektive katalytische Reduktion nach den Reaktionen (1) und (3) statt, in der die Stickoxide in Stickstoff und Wasserdampf übergeführt werden. Parallel bilden sich unter Anwesenheit von Chlorid und Kohlenwasserstoffen im Temperaturbereich zwischen 200-400°C an der übergangsmetallhaltigen SCR-Katalysatorschicht hochtoxische polychlorierte Dibenzo-Dioxine (PCDD) und polychlorierte Dibenzo-Furane (PCDF), die den Abgastrakt in dieser Form nicht verlassen dürfen.

Das so von Rußpartikeln und Stickoxiden gereinigte, aber nun PCDD- bzw. PCDFhaltige Abgas durchströmt deshalb anschließend die auf der Abström- also Reingasseite der Partikelfilterschicht 9 angebrachte Molekularsieb-Schicht 14 und verlässt auf der Abströmseite 12 die Filteranordnung. Wie bereits in der Fig. 1 beschrieben, ist das Molekularsieb mit einer PCDD-, PCDF- und/oder Kohlenwasserstoffoxidationsaktivität ausgestattet und zersetzt diese Stoffe in unbedenkliche Zersetzungsprodukte, die aufgrund ihrer geringeren Molekülgröße die Molekularsieb-Schicht 14 passieren können.

Zur Regenerierung des Partikelfilters muss der Filterkuchen 13 entweder kontinuierlich oder zyklisch entfernt werden. Die kontinuierliche Entfernung des Filterkuchens 13 wird, wie bereits zu Figur 1 beschrieben, dadurch bewerkstelligt, das dem Partikelfilter ein in Figur 2 nicht dargestellter Oxidationskatalysator vorgeschaltet ist, der nach Reaktion (2) zumindest einen Teil des im Abgas vorhandenen Stickstoffmonoxids in Stickstoffdioxid überführt. Der Oxidationskatalysator muss auch stromauf zu der Stelle liegen, an der das Reduktionsmittel dem Abgasstrom beigegeben wird, da sonst das Reduktionsmittel oxidiert und damit für die SCR-Reaktion unbrauchbar würde.

Das im Abgas angereicherte Stickstoffdioxid bewirkt im Kontakt mit dem Filterkuchen 13 nach den Reaktionen (4), (5) und (6) eine Umsetzung der Rußpartikel 10 zu CO, CO₂, N₂ und NO, wobei diese Reaktionen kontinuierlich ablaufen, so dass der Filterkuchen auf einer im wesentlichen konstanten Dicke und der durch diesen verursachte Abgasgegendruck auf einem im wesentlichen konstanten Niveau gehalten werden kann.

Alternativ zu der kontinuierlichen Regenerierung des Partikelfilters besteht auch die Möglichkeit, diesen zyklisch zu regenerieren. Dazu wird in bekannter Weise der Gehalt an Kohlenwasserstoffen im Abgas erhöht, sodass diese im Kontakt mit dem Filterkuchen 13 die Rußpartikel in einer stark exothermen Reaktion oxidieren.

Die in beiden Fällen der Regeneration des Partikelfilters gegebene lokale Temperaturerhöhung an der Anströmseite 11 der Partikelfilterschicht 9 wird durch das Filtermaterial relativ gut von der Abströmseite abgeschirmt, so dass es sinnvoll sein kann, die SCR-Beschichtung anstatt auf der Rohgasseite des Partikelfilters auf dessen Reingasseite anzubringen. Eine solche Anordnung ist in Fig. 3 schematisch dargestellt. Auch hier ist eine Schnittdarstellung gewählt, deren Schnittebene parallel zur Strömungsrichtung des Abgases verläuft. Nachdem die Darstellung in Figur 3 in weiten Teilen gleich ist zu der in Figur 2, wurden für gleiche Teile gleiche Bezugszeichen gewählt. Diese gleichen Teile werden, um Wiederholungen zu vermeiden, nicht nochmals beschrieben, es wird stattdessen auf die Beschreibung zur Figur 2 verwiesen.

Im Unterschied zur Fig. 2, sind hier sowohl der SCR- Katalysatorschicht 16, als auch die Molekularsieb-Schicht 14 auf der Abström-, also Reingasseite 12, des Partikelfilters 9 angebracht, wobei die Molekularsieb-Schicht 14 zwischen der SCR-Katalysatorschicht 16 und den durchströmten Kammern 12a auf der Reingasseite positioniert ist. Die Molekularsieb-Schicht 14 und die SCR- Katalysatorschicht 16 bilden dabei eine bauliche Einheit, die nicht zerstörungsfrei wieder getrennt werden kann.

Herstellungsmöglichkeiten für den Grundkörper des Partikelfilters sollen in Verbindung mit Figur 3 ebenfalls beispielhaft und prinzipiell aufgezeigt werden. Um eine sacklochartige Struktur zu erzeugen, kann entweder eine Vielzahl röhrenförmige Gebilde zu einer dichten Packung zusammengefasst werden, wobei jeweils benachbarte Röhren wechselseitig entweder auf der Anströmseite oder auf der Abströmseite verschlossen werden. Das Verschließen kann mit dem gleichen Material erfolgen, das auch für den Partikelfilter verwendet wird, das Material kann aber auch unterschiedlich, z.B. neutral und/oder gasnundurchlässig sein. Eine weitere Möglichkeit zur Erzeugung der sacklochartigen Kammern 11a, 12a besteht darin, in einem blockartigen Filterkörper Kanäle vorzusehen, von denen jeweils benachbarte wechselseitig an den jeweils gegenüberliegenden Enden verschlossen sind.

Die Beladung mit SCR-aktivem Katalysatormaterial sowie die Ausbildung des Molekularsiebs kann bei den vorstehend angesprochenen Strukturen dadurch erfolgen, dass zunächst nur jede zweite Öffnung auf der Abströmseite 12 verschlossen wird und sodann der Filterkörper in eine Beschichtungs- oder Imprägnierlösung getaucht wird, wodurch die Beschichtungs- oder Imprägnierlösung in den zur Abströmseite hin offenen Kanälen aufsteigt. Die überschüssige Beschichtungs- oder Imprägnierlösung wird nach erfolgter Beschichtung oder Imprägnierung wieder ausgeblasen und die beschichteten oder imprägnierten Kanäle werden sodann zur Anströmseite 11 hin verschlossen.

Eine Möglichkeit, taschenförmige Strukturen zu erzeugen, besteht darin, Packungen von zueinander beabstandeten Platten anzufertigen, wobei die durch die Beabstandung entstandenen benachbarten Freiräume jeweils wechselseitig auf der Anströmseite 11 und der Abströmseite 12 verschlossen sind, so dass sich eine taschenförmige Struktur ausbildet. Die Beladung der Abströmseite 12 mit dem SCR-aktiven Katalysator- und Molekularsiebmaterial kann dadurch erfolgen, dass die für den Aufbau der Struktur verwendeten Platten einseitig mit SCR-aktivem Katalysatormaterial beladen sind und die Platten so geschichtet sind, das sich wechselseitig zwei beladene Plattenseiten und zwei nicht beladene Plattenseiten gegenüber stehen. Die Beladung der Platten kann dabei so erfolgen, dass die Platten in Schichten aufgebaut sind, wobei der Grad der Beladung der Schichten mit SCR- aktivem Katalysatormaterial in Richtung Abströmseite zunimmt. Es besteht aber auch die Möglichkeit, die Beladung der Platten durch Besprühen, oder Bestreichen mit Molekularsiebmaterial und/oder SCR- aktiven Beschichtungs- oder Imprägnierlösungen zu realisieren.

Da eine separate Schicht zur Oxidation von PCDD-, PCDF- oder Kohlenwasserstoffen in Fig. 3 fehlt, muss die SCR- Katalysatorschicht 16 und/oder die Molekularsieb-Schicht 14 mit einer entsprechenden Oxidationsaktivität ausgestattet sein.

Fig. 4 zeigt einen annähernd identischen Aufbau wie Fig. 3, nur ist nun zwischen der SCR- Katalysatorschicht 16 und der Molekularsieb-Schicht 14 eine Schicht 17 mit PCDD-, PCDF- und/oder Kohlenwasserstoffoxidationsaktivität angebracht, um das Verstopfen des Molekularsiebs mit Dioxinen, Furanen oder Kohlenwasserstoffen zu verhindern. Die Schicht 17 weist dabei bevorzugt eine ähnliche Porosität wie die SCR- Katalysatorschicht 16 oder die Partikelfilterschicht 9 auf.

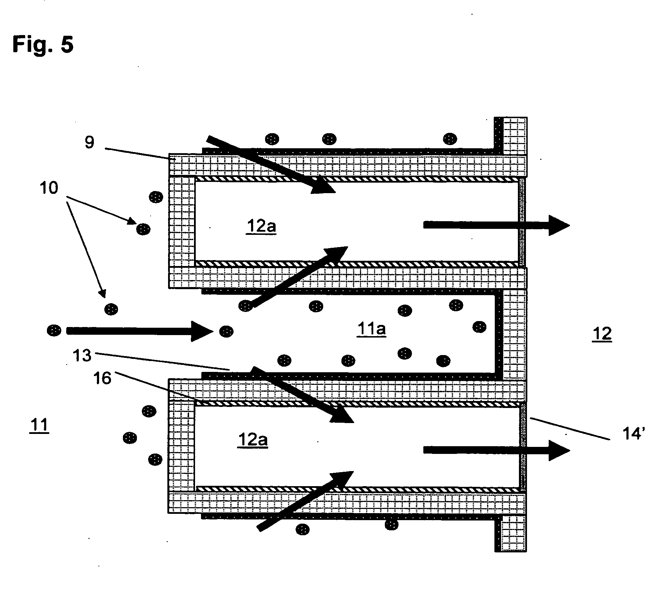

Eine weitere Ausführungsform des erfindungsgemäßen Abgasnachbehandlungssystems zeigt Fig. 5 schematisch in Schnittdarstellung. Hier sind die reingasseitigen Kammern 12a von der Reingasseite 12 stromab des Partikelfilters durch Molekularsiebanordnungen 14' getrennt. Zur Erhöhung der mechanischen Festigkeit können diese auf einem geeigneten, z.B. metallischen oder keramischen, Träger aufgebracht sein.

Selbstverständlich besteht auch die Möglichkeit, das Molekularsieb als separates Bauteil auszuführen, das zwischen dem übergangsmetallhaltigen SCR-Katalysator und dem Austritt des Abgases in die Umgebung angebracht ist. In diesem Fall ist es sinnvoll, dem Molekularsieb eine PCDD-, PCDF- und/oder Kohlenwasserstoffoxidationsaktivität aufzuprägen, um die Zersetzung dieser Stoffe zu bewirken und ein Verstopfen des Molekularsiebs zu verhindern.

Die vorstehend beschriebenen Ausführungen lassen sich selbstverständlich mit dem Fachmann zugänglichem Fachwissen auf vielfältige Weise ausgestalten, ohne den grundlegenden erfinderischen Gedanken zu verlassen, den beschriebenen Ausführungsformen kommt somit nur Beispielcharakter zu.

## Patentansprüche

1. Vorrichtung zur Verminderung der Emission von polychlorierten Dibenzo-Dioxinen und polychlorierten Dibenzo-Furanen die an wenigstens einem übergangsmetallhaltigen Katalysator entstanden sind, wobei der übergangsmetallhaltige Katalysator auf einem Partikelfilter, der in der Abgasableitung einer Brennkraftmaschine verbaut ist, angebracht ist und von diesem nicht zerstörungsfrei getrennt werden kann, **dadurch gekennzeichnet, dass** zwischen dem übergangsmetallhaltigen Katalysator (16) und dem Abgas auf der Reingasseite (12) wenigstens ein Molekularsieb (14, 14'), das polychlorierte Dibenzo-Dioxine und polychlorierte Dibenzo-Furane zurückhält, angebracht ist und dass die Vorrichtung stromauf zum Molekularsieb (14, 14') Mittel für die Oxidation von Kohlenwasserstoffen und polychlorierten Dibenzo-Dioxinen und polychlorierten Dibenzo-Furanen aufweist und dass der Durchmesser der freien Durchgänge des Molekularsiebs (14, 14') zwischen 3Å und 12Å liegt.

2. Vorrichtung nach Anspruch 1, **dadurch gekennzeichnet, dass** die Anströmseite des Molekularsiebes Mittel für die Oxidation von Kohlenwasserstoffen und polychlorierten Dibenzo-Dioxinen und polychlorierte Dibenzo-Furanen aufweist.

3. Vorrichtung nach Anspruch 1, **dadurch gekennzeichnet, dass** der übergangsmetallhaltige Katalysator auf der Anströmseite des Partikelfilters angeordnet ist und dass das Molekularsieb in Form einer Molekularsieb-Schicht 14 auf der Reingasseite des Partikelfilters angeordnet ist.

4. Vorrichtung nach Anspruch 1, **dadurch gekennzeichnet, dass** der übergangsmetallhaltige Katalysator auf der Abströmseite des Partikelfilters angeordnet ist und dass das Molekularsieb in Form einer Molekularsieb-Schicht 14 auf der Reingasseite des übergangsmetallhaltigen Katalysators angeordnet ist.

5. Vorrichtung nach Anspruch 1, **dadurch gekennzeichnet, dass** der Partikelfilter aus Metall und/oder Sintermetall und/oder Keramik und/oder Schaum und/oder Keramikfasern und/oder Quarzfasern und/oder Glasfasern und/oder Siliziumcarbid und/oder Aluminiumtitanat besteht.

6. Vorrichtung nach dem Anspruch 1, **dadurch gekennzeichnet, dass** es sich bei den Übergangsmetallen des übergangsmetallhaltigen Katalysators um Kupfer und/oder Eisen und/oder Kobalt handelt.

7. Vorrichtung nach einem der vorherigen Ansprüche, **dadurch gekennzeichnet, dass** es sich bei dem übergangsmetallhaltigen Katalysator um einen Katalysator zur selektiven katalytischen Reduktion von Stickoxiden im Abgas einer Brennkraftmaschine mit Hilfe von Ammoniak und/oder ammoniakabspaltenden Reduktionsmitteln handelt.

8. Vorrichtung nach einem der vorherigen Ansprüche, **dadurch gekennzeichnet, dass** der übergangsmetallhaltige Katalysator Zeolith enthält.

9. Vorrichtung nach Anspruch 8, **dadurch gekennzeichnet, dass** der Zeolith vom Typ MFI und/oder BEA ist.

10. Vorrichtung nach einem der vorherigen Ansprüche, **dadurch gekennzeichnet, dass** das Molekularsieb mittels Zeolithen und/oder Silikaten und/oder Metallsilikaten und/oder Aluminaten und/oder Metallaluminaten und/oder Silicophosphaten und/oder Metallsilicophosphaten und/oder Silicoaluminophosphaten und/oder Aluminophosphaten und/oder Metallaluminophosphaten und/oder Aluminiumsilikaten hergestellt ist.

11. Vorrichtung nach einem der vorherigen Ansprüche, **dadurch gekennzeichnet, dass** das Molekularsieb Gitterstrukturen vom Typ AEN und/oder OSI und/oder EPI und/oder ERI und/oder FER und/oder FAU und/oder OFF und/oder MFI und/oder LTL und/oder VFI und/oder MAZ und/oder MEI und/oder EMT und/oder CHA und/oder KFI und/oder BEA und/oder MFS und/oder MEL und/oder MTW und/oder EUO und/oder MTT und/oder HEU und/oder FER und/oder TON und/oder MOR aufweist.

12. Vorrichtung nach einem der vorherigen Ansprüche, **dadurch gekennzeichnet, dass** das Molekularsieb aus Zeolithen vom Typ Mordenith und/oder Epistilbit und/oder Chabazit und/oder Erionit und/oder Mazzit und/oder Ferrierit und/oder Faujasit und/oder Offretit und/oder ZSM-3 und/oder ZSM-4 und/oder ZSM-5 und/oder ZSM-12 und/oder ZSM-18 und/oder ZSM-20 und/oder ZSM-22 und/oder ZSM-23 und/oder ZSM-34 und/oder ZSM-35 und/oder ZSM-38 und/oder ZSM-48 und/oder ZSM-50 und/oder Omega und/oder Beta und/oder Zeolith A und/oder Zeolith L und/oder Zeolith Y und/oder Zeolith X und/oder ZK-4 und/oder ZK-5 und/oder ZK-14 und/oder ZK-20 und/oder ZK-21 und/oder ZK22 einzeln oder in beliebiger Kombination besteht.

13. Vorrichtung nach einem der vorherigen Ansprüche, **dadurch gekennzeichnet, dass** die mittlere Porengröße und/oder die Porosität des Molekularsiebs geringer ist als die des übergangsmetallhaltigen Katalysators.

14. Vorrichtung nach einem der vorherigen Ansprüche, **dadurch gekennzeichnet, dass** das Molekularsieb zumindest an seiner Oberfläche eine Oxidationseigenschaft für Kohlenwasserstoffe und/oder PCDD und/oder PCDF besitzt.

15. Vorrichtung nach einem der vorherigen Ansprüche, **dadurch gekennzeichnet, dass** der übergangsmetallhaltige Katalysator zumindest auf der, der Reingasseite zugewandten Seite, eine Oxidationseigenschaft für Kohlenwasserstoffe und/oder PCDD und/oder PCDF besitzt.

16. Vorrichtung nach einem der vorherigen Ansprüche, **dadurch gekennzeichnet, dass** zwischen dem übergangsmetallhaltigen Katalysator und dem Molekularsieb eine Schicht 17 mit PCDD- und/oder PCDF- Oxidationseigenschaft angeordnet ist.

17. Vorrichtung nach einem der Ansprüche 13 bis 15, **dadurch gekennzeichnet, dass** das Molekularsieb und/oder der übergangsmetallhaltige Katalysator und/ oder die Schicht 17 zur Oxidation von Kohlenwasserstoffen und/oder PCDD und/oder PCDF Elemente der Platinmetallgruppe und/oder Wolfram und/oder Titan und/oder Lanthan und/oder Molybdän und/oder Cer und/oder Mangan und/oder Vanadium enthält.

18. Vorrichtung nach einem der vorherigen Ansprüche, **dadurch gekennzeichnet, dass** der übergangsmetallhaltige Katalysator und/oder das als Molekularsieb-Schicht 14 ausgebildete Molekularsieb und/oder die Schicht 17 mit Kohlenwasserstoff- und/oder PCDD- und/oder PCDF- Oxidationseigenschaft miteinander verbunden sind und nicht zerstörungsfrei von einander getrennt werden können.

19. Vorrichtung nach einem der vorherigen Ansprüche, **dadurch gekennzeichnet, dass** der übergangsmetallhaltige Katalysator und/oder das Molekularsieb und/oder die Schicht mit Kohlenwasserstoff- und/oder PCDD- und/oder PCDF-Oxidationseigenschaft auf separaten Bauteilen angeordnet sind.

20. Vorrichtung nach einem der vorherigen Ansprüche, **dadurch gekennzeichnet, dass** die mittlere Dicke des Molekularsiebs oder der Molekularsieb-Schicht mindestens 3Å höchstens aber 5µm beträgt.

21. Vorrichtung nach einem der vorherigen Ansprüche, **dadurch gekennzeichnet, dass** bei einem schichtförmig auf den Partikelfilter aufgebrachten übergangsmetallhaltigen Katalysator die mittlere Dicke der Katalysatorschicht zwischen 5µm- 500 µm liegt.

22. Verfahren zur Herstellung einer Vorrichtung nach Anspruch 1, **dadurch gekennzeichnet, dass** der übergangsmetallhaltige Katalysator durch Beschichtung eines, insbesondere keramischen oder metallischen, Partikelfilters hergestellt ist und die Konzentration wenigstens eines Übergangsmetalls an der reingasseitigen Katalysatoroberfläche durch Ionenaustausch gegen ein anderes Metall, dass eine Kohlenwasserstoff- und/oder PCDD- oder PCDF-Oxidationseigenschaft besitzt, ausgetauscht ist und auf dieser Schicht eine als Molekularsieb-Schicht 14 ausgebildete weitere Schicht aufgebracht wird.

## Claims

1. A device for reducing the emission of polychlorinated dibenzodioxins and polychlorinated dibenzofurans which have been produced at at least one transition metal-containing catalyst, the transition metal-containing catalyst being applied to a particle filter which is installed in the exhaust pipe of an internal combustion engine, and not being able to be separated therefrom in non-destructive manner, **characterised in that** at least one molecular sieve (14, 14') which holds back polychlorinated dibenzodioxins and polychlorinated dibenzofurans is applied between the transition metal-containing catalyst (16) and the exhaust on the clean-gas side (12), and **in that** the device upstream from the molecular sieve (14, 14') has means for the oxidation of hydrocarbons and polychlorinated dibenzodioxins and polychlorinated dibenzofurans, and **in that** the diameters of the free passages of the molecular sieve (14, 14') are between 3Å and 12Å.

2. A device according to Claim 1, **characterised in that** the inflow side of the molecular sieve has means for the oxidation of hydrocarbons and polychlorinated dibenzodioxins and polychlorinated dibenzofurans.

3. A device according to Claim 1, **characterised in that** the transition metal-containing catalyst is arranged on the inflow side of the particle filter, and **in that** the molecular sieve is arranged in the form of a molecular-sieve layer 14 on the clean-gas side of the particle filter.

4. A device according to Claim 1, **characterised in that** the transition metal-containing catalyst is arranged on the outflow side of the particle filter, and **in that** the molecular sieve is arranged in the form of a molecular-sieve layer 14 on the clean-gas side of the transition metal-containing catalyst.

5. A device according to Claim 1, **characterised in that** the particle filter consists of metal and/or sintered metal and/or ceramic and/or foam and/or ceramic fibres and/or quartz fibres and/or glass fibres and/or silicon carbide and/or aluminium titanate.

6. A device according to Claim 1, **characterised in that** the transition metals of the transition metal-containing catalyst are copper and/or iron and/or cobalt.

7. A device according to one of the preceding claims, **characterised in that** the transition metal-containing catalyst is a catalyst for the selective catalytic reduction of nitrogen oxides in the exhaust of an internal combustion engine with the aid of ammonia and/or reducing agents which split off ammonia.

8. A device according to one of the preceding claims, **characterised in that** the transition metal-containing catalyst contains zeolite.

9. A device according to Claim 8, **characterised in that** the zeolite is of the type MFI and/or BEA.

10. A device according to one of the preceding claims, **characterised in that** the molecular sieve is produced by means of zeolites and/or silicates and/or metal silicates and/or aluminates and/or metal aluminates and/or silicophosphates and/or metal silicophosphates and/or silicoaluminophosphates and/or aluminophosphates and/or metal aluminophosphates and/or aluminium silicates.

11. A device according to one of the preceding claims, **characterised in that** the molecular sieve has lattice structures of the type AEN and/or OSI and/or EPI and/or ERI and/or FER and/or FAU and/or OFF and/or MFI and/or LTL and/or VFI and/or MAZ and/or MEI and/or EMT and/or CHA and/or KFI and/or BEA and/or MFS and/or MEL and/or MTW and/or EUO and/or MTT and/or HEU and/or FER and/or TON and/or MOR.

12. A device according to one of the preceding claims, **characterised in that** the molecular sieve consists of zeolites of the type mordenite and/or epistilbite and/or chabazite and/or erionite and/or mazzite and/or ferrierite and/or faujasite and/or offretite and/or ZSM-3 and/or ZSM-4 and/or ZSM-5 and/or ZSM-12 and/or ZSM-18 and/or ZSM-20 and/or ZSM-22 and/or ZSM-23 and/or ZSM-34 and/or ZSM-35 and/or ZSM-38 and/or ZSM-48 and/or ZSM-50 and/or omega and/or beta and/or zeolite A and/or zeolite L and/or zeolite Y and/or zeolite X and/or ZK-4 and/or ZK-5 and/or ZK-14 and/or ZK-20 and/or ZK-21 and/or ZK-22 individually or in any combination whatsoever.

13. A device according to one of the preceding claims, **characterised in that** the average pore size and/or the porosity of the molecular sieve is less than that of the transition metal-containing catalyst.

14. A device according to one of the preceding claims, **characterised in that** the molecular sieve, at least on its surface, has an oxidation property for hydrocarbons and/or PCDD and/or PCDF.

15. A device according to one of the preceding claims, **characterised in that** the transition metal-containing catalyst at least on the side facing the clean-gas side, has an oxidation property for hydrocarbons and/or PCDD and/or PCDF.

16. A device according to one of the preceding claims, **characterised in that** a layer 17 with PCDD and/or PCDF oxidation property is arranged between the transition metal-containing catalyst and the molecular sieve.

17. A device according to one of Claims 13 to 15, **characterised in that** the molecular sieve and/or the transition metal-containing catalyst and/or the layer 17 for the oxidation of hydrocarbons and/or PCDD and/or PCDF contains elements of the platinum metal group and/or tungsten and/or titanium and/or lanthanum and/or molybdenum and/or cerium and/or manganese and/or vanadium.

18. A device according to one of the preceding claims, **characterised in that** the transition metal-containing catalyst and/or the molecular sieve formed as a molecular-sieve layer 14 and/or the layer 17 with hydrocarbon and/or PCDD and/or PCDF oxidation property are joined together and cannot be separated from one another in non-destructive manner.

19. A device according to one of the preceding claims, **characterised in that** the transition metal-containing catalyst and/or the molecular sieve and/or the layer with hydrocarbon and/or PCDD and/or PCDF oxidation property are arranged on separate components.

20. A device according to one of the preceding claims, **characterised in that** the average thickness of the molecular sieve or the molecular-sieve layer is at least 3 Å, but at most 5 µm.

21. A device according to one of the preceding claims, **characterised in that** for a transition metal-containing catalyst applied to the particle filter in a layer the average thickness of the catalyst layer is between 5 µm and 500 µm.

22. A method for the production of a device according to Claim 1, **characterised in that** the transition metal-containing catalyst is produced by coating an in particular ceramic or metallic particle filter, and the concentration of at least one transition metal on the catalyst surface on the clean-gas side is exchanged by ion exchange for another metal which has a hydrocarbon and/or PCDD or PCDF oxidation property, and a further layer formed as a molecular-sieve layer 14 is applied to this layer.

## Revendications

1. Dispositif pour diminuer l'émission de dibenzo-dioxines polychlorées et de dibenzo-furanes polychlorés se formant sur au moins un catalyseur renfermant un métal de transition, ce catalyseur étant monté sur un filtre à particules utilisé dans la conduite des gaz d'échappement d'un moteur à combustion interne et ne pouvant pas être séparé de celui-ci sans être endommagé,
**caractérisé en ce qu'**
entre le catalyseur (16) renfermant un métal de transition et les gaz d'échappement, côté gaz épurés (12), est monté au moins un tamis moléculaire (14, 14') qui retient les dibenzo-dioxines polychlorées et les dibenzo-furanes polychlorés, **en ce que** le dispositif comporte en amont du tamis moléculaire (14, 14'), des moyens d'oxydation des hydrocarbures, des dibenzo-dioxines polychlorées et des dibenzo-furanes polychlorés, et **en ce que** le diamètre des ouvertures des passages libres du tamis moléculaire (14, 14') est situé entre 3Å et 12 Å.

2. Dispositif conforme à la revendication 1,
**caractérisé en ce que**
la face d'entrée du tamis moléculaire est équipée de moyens d'oxydation des hydrocarbures, des dibenzo-dioxines polychlorées et des dibenzo-furanes polychlorés.

3. Dispositif conforme à la revendication 1,
**caractérisé en ce que**
le catalyseur renfermant un métal de transition est situé sur la face d'entrée du filtre à particules et le tamis moléculaire réalisé sous la forme d'une couche de tamis moléculaire (14) est situé sur la face des gaz épurés du filtre à particules.

4. Dispositif conforme à la revendication 1,
**caractérisé en ce que**
le catalyseur renfermant un métal de transition est situé sur la face de sortie du filtre à particules et le tamis moléculaire réalisé sous la forme d'une couche de tamis moléculaire (14) est situé sur la face des gaz épurés du catalyseur renfermant un métal de transition.

5. Dispositif conforme à la revendication 1,
**caractérisé en ce que**
le filtre à particules est constitué de métal et/ou de métal fritté et/ou de céramique et/ou de mousse et/ou de fibres céramiques et/ou de quartz et/ou de fibres de verre et/ ou de carbure de silicium et/ou de titanate d'aluminium.

6. Dispositif conforme à la revendication 1,
**caractérisé en ce que**
les métaux de transition du catalyseur renfermant un métal de transition sont constitués par du cuivre et/ou du fer et/ou du cobalt.

7. Dispositif conforme à l'une des revendications précédentes, **caractérisé en ce que**
le catalyseur renfermant un métal de transition, est un catalyseur pour la réduction catalytique sélective des oxydes d'azote dans les gaz d'échappement d'un moteur à combustion interne, à l'aide d'ammoniac et/ou d'un agent réducteur libérant de l'ammoniac.

8. Dispositif conforme à l'une des revendications précédentes, **caractérisé en ce que**
le catalyseur renfermant un métal de transition renferme une zéolithe.

9. Dispositif conforme à la revendication 8,
**caractérisé en ce que**
la zéolithe est une zéolithe du type MFI et/ou BEA.

10. Dispositif conforme à l'une des revendications précédentes, **caractérisé en ce que**
le tamis moléculaire est fabriqué à partir de zéolithes et/ou de silicates et/ou de silicates métalliques et/ou d'aluminates et/ou d'aluminates métalliques et/ou de silicophosphates et/ou de silicophosphates métalliques et/ou de silicoaluminophosphates et/ou d'aluminophosphates et/ou d'aluminophosphates métalliques et/ou de silicates d'aluminium.

11. Dispositif conforme à l'une des revendications précédentes, **caractérisé en ce que**
le tamis moléculaire comporte des structures de réseau de type AEN et/ou OSI et/ou EPI et/ou ERI et/ou FER et/ou FAU et/ou OFF et/ou MFI et/ou LTL et/ou VFI et/ou MAZ et/ou MEI et/ou EMT et/ou CHA et/ou KFI et/ou BEA et/ou MFS et/ou MEL et/ou MTW et/ou EUO et/ou MTT et/ou HEU et/ou FER et/ou TON et/ou MOR.

12. Dispositif conforme à l'une des revendications précédentes, **caractérisé en ce que**
le tamis moléculaire est constitué de zéolithes de type mordenithe et/ou epistilbite et/ou chabasite et/ou erionite et/ou mazzite et/ou ferrierite et/ou faujasite et/ou offretite et/ou ZSM-3 et/ou ZSM-4 et/ou ZSM-5 et/ou ZSM-12 et/ou ZSM-18 et/ou ZSM-20 et/ou ZSM-22 et/ou ZSM-23 et/ou ZSM-34 et/ou ZSM-35 et/ou ZSM-38 et/ou ZSM-48 et/ou ZSM-50 et/ou oméga et/ou bêta et/ou zéolithe A et/ou zéolithe L et/ou zéolithe Y et/ou zéolithe X et/ou ZK-4 et/ou ZK-5 et/ou ZK-14 et/ou ZK-20 et/ou ZK-21 et/ou ZK-22, seules ou en combinaison quelconque.

13. Dispositif conforme à l'une des revendications précédentes, **caractérisé en ce que**
la dimension de pores moyenne et/ou la porosité du tamis moléculaire est inférieure à celle du catalyseur renfermant un métal de transition.

14. Dispositif conforme à l'une des revendications précédentes, **caractérisé en ce que**
le tamis moléculaire présente au moins sur sa surface, des propriétés d'oxydation des hydrocarbures et/ou de la PCDD et/ou du PCDF.

15. Dispositif conforme à l'une des revendications précédentes, **caractérisé en ce que**
le catalyseur renfermant un métal de transition présente, au moins sur sa face tournée vers sa face des gaz épurés, des propriétés d'oxydation des hydrocarbures et/ou de la PCDD et/ou du PCDF.

16. Dispositif conforme à l'une des revendications précédentes, **caractérisé en ce qu'**
une couche (17) ayant des propriétés d'oxydation de la PCDD et/ou du PCDF est disposée entre le catalyseur renfermant un métal de transition et le tamis moléculaire.

17. Dispositif conforme à l'une des revendications 13 à 15,
**caractérisé en ce que**
le tamis moléculaire et/ou le catalyseur renfermant un métal de transition et/ou la couche (17) renferment, pour permettre l'oxydation, des hydrocarbures et/ou de la PCDD et/ou du PCDF des éléments du groupe du platine et/ou du tungstène et/ou du titane et/ou du lanthane et/ou du molybdène et/ou du cérium et/ou du manganèse et/ou du vanadium.

18. Dispositif conforme à l'une des revendications précédentes, **caractérisé en ce que**
le catalyseur renfermant un métal de transition et/ou le tamis moléculaire réalisé sous la forme d'une couche de tamis moléculaire (14) et/ou la couche (17) ayant des propriétés d'oxydation des hydrocarbures et/ou de la PCDD et/ou du PCDF, sont reliés entre-eux et ne peuvent pas être séparés sans être endommagés.

19. Dispositif conforme à l'une des revendications précédentes, **caractérisé en ce que**
le catalyseur renfermant un métal de transition et/ou le tamis moléculaire et/ou la couche ayant des propriétés d'oxydation des hydrocarbures et/ou de la PCDD et/ou du PCDF, sont disposés sur des éléments séparés.

20. Dispositif conforme à l'une des revendications précédentes, **caractérisé en ce que**
l'épaisseur moyenne du tamis moléculaire ou de la couche de tamis moléculaire est d'au moins 3Å mais au maximum de 5 µm.

21. Dispositif conforme à l'une des revendications précédentes, **caractérisé en ce que**
dans le cas d'un catalyseur renfermant un métal de transition appliqué sous la forme d'une couche sur le filtre à particules, l'épaisseur moyenne de la couche catalytique est comprise entre 5 µm et 500 µm.

22. Procédé d'obtention d'un dispositif conforme à la revendication 1, **caractérisé en ce que**
le catalyseur renfermant un métal de transition, est obtenu par revêtement d'un filtre à particules en particulier céramique ou métallique, la concentration en au moins un métal de transition sur la surface du catalyseur située côté gaz épurés, est substituée par échange d'ions par un autre métal qui possède des propriétés d'oxydation des hydrocarbures et/ou de la PCDD et/ou du PCDF, et sur cette couche est appliquée une autre couche réalisée sous la forme d'une couche de tamis moléculaire (14).
